# EUROPEAN PATENT SPECIFICATION

(11) **EP 1 495 418 B1**
(45) Date of publication and mention of the grant of the patent: **10.04.2019**
(21) Application number: 02807266.8
(22) Date of filing: 18.04.2002
(51) Int. Cl.: G06F 9/4401

(54) **SYSTEM FOR AND METHOD OF NETWORK BOOTING OF AN OPERATING SYSTEM TO A CLIENT COMPUTER USING HIBERNATION**
SYSTEM UND VERFAHREN ZUM NETZWERK-BOOTEN EINES BETRIEBSSYSTEMS AUF EINEN KUNDENCOMPUTER UNTER VERWENDUNG VON HIBERNATION
SYSTEME ET PROCEDE POUR L'AMORCAGE PAR RESEAU D'UN SYSTEME D'EXPLOITATION VERS UN ORDINATEUR CLIENT EN UTILISANT L'HIBERNATION

(43) Date of publication of application: 12.01.2005
(73) Proprietor: Citrix Systems, Inc., Fort Lauderdale, FL 33309 (US)
(72) Inventor: BUROKAS, Gint, Orland Park, IL 60467 (US); LUSINSKY, Robert, Corona, CA 92879 (US); BUNCH, Kenny, Chesapeake, VA 23330 (US); GARELICK, Mike, Oceanside, CA 60467 (US); SANDUSKY, Marc, Waltham, MA 02453-3467 (US)
(74) Representative: Graham Watt & Co LLP
(86) International application number: PCT/US2002/012275
(87) International publication number: WO 2003/090109

(56) References cited:
- US-A- 5 280 627
- US-A- 5 404 527
- US-A- 5 974 547
- US-A- 6 101 601
- US-A- 6 108 697
- US-B1- 6 209 088
- US-B1- 6 226 667

## Description

### Field of the Invention

The present invention relates generally to network booting of an operating system (O/S) on one or more client devices, such as personal computers (PC's), employing a hibernation image. More specifically, the invention facilitates remote booting of client devices by employing virtual disk emulation and, in certain preferred embodiments, broadcasting or multicasting of data residing on a network server which is necessary to appropriately boot and configure the one or more client devices, the data including hibernation, O/S and application files

### Background of the Invention

Computer networks are commonly used in offices or corporate environments to interconnect personal computers (PCs). With the growth of PC usage has come an increasing demand to share computer files and facilitate administration of each PC after installation. In a network comprised of many PCs, the cost to an organization of having an Information Technology representative physically visit and service each PC can be enormous. In order to reduce these costs, software and computer manufacturers have developed technologies aimed at maintaining software products centrally on a network server and then downloading the desired software, via the network, to each client PC.

Designers and manufacturers of embedded intelligent connected equipment are looking for ways to reduce cost and improve manageability & reliability, facilitate deployment and secure intellectual property within these devices. One way to accomplish this is to introduce the ability for the client PC to boot from the network. The purpose of a PC's boot process is to load the necessary operating system components, initialize the hardware devices and present to the user an application. This is a long process and one that under normal conditions needs to consider changes in hardware or software configurations, as well as changes in authorized users. Network booting is better suited to those situations wherein the PC's associated hardware is fixed and the client PC's role does not change frequently. Network booting allows for the removal of the client PC's hard disk and facilitates centralized management of software content. Because current network bandwidth (10/100 Mbs and 1 Gbs) does not approach the speed of a client PC's local hard disk, a remote "cold boot" of an operating system (O/S) in a client PC from a network server is not terribly efficient and can take a great deal of time. Furthermore, bandwidth and network server resources can be further degraded by the additional challenge of attempting to boot simultaneously scores of client devices (a "boot storm".) The lengthy time required to "cold boot" further distracts from the perception and behavior of a typical embedded device. Thus, what is needed is a scalable way to speed up booting of a plurality of client devices from a loading server in a network.

Basic input/output system (BIOS), PC and O/S manufacturers have introduced a technique called "hibernation", whereby the current state of the PC memory & state of all devices are saved to disk and then restored at some future time. Hibernation had been used primarily in notebook PCs in order to conserve battery power. For example, a notebook PC configured for "Hibernate mode" will save its state to its local hard drive and power off when its lid is closed or after a period of inactivity, and then restore itself when the lid is re-opened. The net effect is to conserve battery power, with an advantageous side effect of returning the PC to the state prior to hibernation more quickly than if the client PC were to undergo a full "cold boot." When power is reapplied to the notebook, the notebook will load a very small portion of the O/S. The O/S will check if a valid hibernation image exists. If a hibernation image exists, the O/S then will copy back into PC memory the memory contents saved to the hibernation file. If a hibernation image does not exist, then a normal "cold boot" process is commenced. Note that a hibernation "resume" using a hibernation image has an advantageous side effect of returning the PC to the desired state more quickly than if the PC were to undergo a "cold boot", due in part to less required data initialization.

U.S. Patent No. 6,101,601 to Matthews, et al., discloses an approach to resolving the long boot time associated with remotely booting a client device from a boot image in a network. However, that patent teaches resuming, following a reset of some kind, from a hibernation image stored on each client PC's local storage media. This approach requires any reconfiguration of the desired state of the PC to be performed prior to the hibernation of the client PC, and could possibly run afoul of network bandwidth problems as the server individually transfers a plurality of hibernate images to a corresponding plurality of client PCs in networks with large numbers of client PCs.

U. S. Patent No. 5,974, 547 to Klimenko teaches an apparatus for and method of using disk emulation for booting a 32-bit PC operating system (O/S) on a client computer through a networked connection to a server. In particular, that patent teaches a method of switching (on each disk I/O call) between the 32-bit protected mode processing of Windows 9x O/S's and the 16-bit real mode used by the BIOS, often referred to as "thunking", until the client's O/S is able to perform networking on its own. The method and apparatus presented therein is particularly suited to booting an O/S such as Windows 95® from a server by downloading a complete image of the software applications desired on the client PC, including the O/S. However, that patent does not take advantage of the Hibernate function available on later versions of Microsoft Corporation's O/Ss, namely Windows 2000®, and Windows XP®, which run in protected mode. Nor does it address another feature of the present invention, the use of multicasting of desired data, which in certain preferred embodiments includes a Hibernation file, to a plurality of client PCs in the network.

### Summary of the Invention

The present invention provides a system for and method of booting an O/S on one or more client PCs from a hibernation image stored on a network server employing virtual disk emulation.

In accordance with certain preferred embodiments of the invention, data necessary for the boot process to proceed, such as a hibernation file including a hibernation image and several O/S files, may be synchronously streamed from a network server as described below and in co-pending patent application entitled "System for and Method of Streaming Data to a Computer in a Nework", filed and assigned to the assignee of the present invention.

The one or more client PC's each operate an O/S which supports hibernation, such as Microsoft Windows 2000® and XP®. Inventive software drivers operate so as to support resuming each client PC to a usable state, in part by accepting from the
network server a plurality of sectors (data packets), which collectively comprise the hibernation file. Requests for disk access in the early stage of the boot process will initially be redirected to the network server from each client using the PXE service. The PXE code will establish the initial virtual connection between each client and the server, allowing the server to be seen as another client drive. The PXE code facilitates downloading of additional emulation code, which in turn downloads O/S code that facilitates downloading of the hibernation file. During early phases of the boot process, insufficient O/S components have been loaded and activated to provide client O/S supported network access. Consequently, client hard disk access requests are handled through the Int 13h handler and the downloaded emulation code. Roughly 25% through the boot of the O/S, the O/S will assume control over communications with the server using the inventive drivers, effectively bypassing the need for the BIOS Int 13h services.

In other embodiments, the data downloaded from the network server may be retrieved in a predetermined manner from a plurality of sectors of a storage device associated with the network server. During operation, the one or more client PC's may issue a number of requests for a download of the plurality of sectors. The requests are forwarded to the server, which transparently emulates operation of a local disk at each of the client PCs. In one embodiment, the network server broadcasts to each of the requesting clients the desired data from a virtual hard drive associated with the server. In yet another embodiment, the network server multicasts to each of the requesting clients the desired data from a virtual hard drive associated with the server. The server preferably accepts download requests during a predetermined invitation period, prior to multicasting.

In certain embodiments, the emulation is effected by executing emulation code resident on each of the client PCs. Preferably, the emulation code is pre-execution boot environment (PXE) code resident on a network interface card (NIC) of each client PC. In alternative embodiments, the emulation is a result of inventive boot code downloaded from the network server which when executed assumes disk access control by an interrupt handling procedure (Int 13h) and requests the desired data. And in yet another embodiment, the emulation is effected at each client PC by executing portions of the O/S (preferably Windows 2000, NT or XP ®) and two inventive drivers downloaded from the network server, which similarly assumes control of the client's network interface and generates requests for desired data.

Streamed data may be multicast in burst mode or broadcast from the network server to client PC's requesting a download. Therefore, the data need only be sent once rather than redundantly to each client PC. As data sectors are received at each client, they may be queued into a data cache pre-allocated by the inventive drivers. This advantageously allows each client to concern itself with other activities, such as initializing O/S data structures, drivers and/or applications.

The invention advantageously requires less hardware because the client devices may be configured without hard disks. The invention also allows all client PCs to boot the same hibernation image. This translates to easier maintenance of individual client devices since each client is no longer running unique copies of the O/S or the applications. For example, a software upgrade need only be performed on a single hibernation image as opposed to any number of individual client PCs. Considering that the hibernation image may be multicast to a plurality of clients, network traffic will be considerably reduced during peak traffic times, such as when a great number of clients are attempting to boot together. The solution provided herein is highly scalable, as very few additional system resources will be necessary to boot an increasing number of client PC's.

### Brief Description of the Drawing

**Figure 1** is a block diagram illustrating a client/server network environment in which the present invention may be practiced.
**Figure 2** is a block diagram illustrating a network adapter in accordance one embodiment of the present invention.
**Figure 3** is a block diagram illustrating an embodiment of a portion of a client's local memory after the inventive drivers have been downloaded from a network server and executed.
**Figure 4** is a flowchart illustrating an embodiment of the synchronous streaming process in provided by the present invention.
**Figure 5** is a flowchart illustrating an embodiment of the remote network booting process employing a hibernation image file.

### Detailed Description of Certain Embodiments

Certain preferred embodiments of the invention will now be described with reference to the accompanying drawings.

As used in the description that follows, the term "hibernate" generally indicates that a PC's power is turned off in such a way that the PC is "paused." While the PC is off, power is removed from all or most of its components. And when the PC is turned back on or "resumed", it is returned to normal operation in the same state in which it was turned off. A "hibernate function", such as is described in U.S. Patent No. 6,209,088 assigned to Microsoft Corp.®, is to be invoked just prior to turning off the PC, interrupting all program execution and saving all PC state information to a "hibernate image" in non-volatile storage. A "resume function" executes from volatile memory, implemented by code that is typically executed from the same executable address space that is used by the O/S and/or application programs initiated by the O/S. In particular embodiments of the invention described below, a "hibernate file" may also comprise O/S files such as O/S drivers and initialization files which are read into the PC's volatile memory prior to initiating the hibernate function.

As used herein, the terms "MBR" (Master Boot Record), "storage driver", and "network filter driver" refer to bootstrapping software modules developed by the Applicants. In order to differentiate software modules developed by persons other than the Applicants, a convention of preceding such modules' names with "O/S" has been adopted. Also, the terms "virtual drive", "boot drive" and "server drive" are used synonymously in the description, which follows.

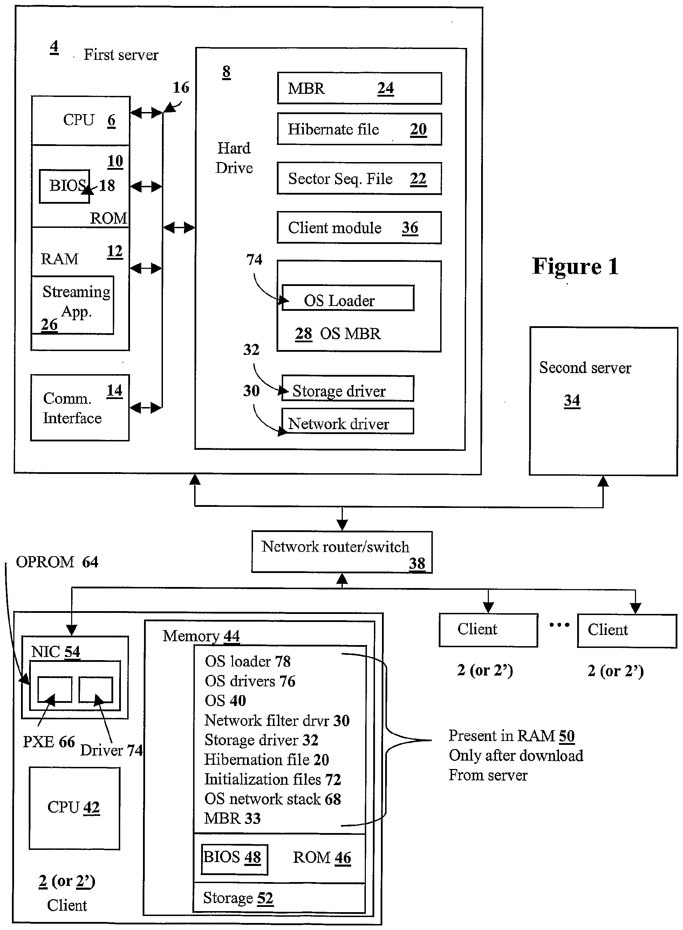

The networked computing environment shown in **Figure 1** may be an enterprise network or client/server configuration, in which any one of the PC's 2 may function as a file server or network server **4.** Network server **4** may be any ordinary type of system, from a relatively small PC to a large mainframe. In the particular embodiments described below, server **4** is a mid-range computer comprised of one or more central processing units (CPUs) **6**, a hard drive **8**, read only memory (ROM) **10** with its own BIOS **18**, random access memory (RAM) **12**, and a network adaptor **14** all coupled together by one or more busses **16.** Those skilled in the art will recognize that the BIOS **18** is a set of basic routines that helps to transfer information between elements within the network server. In certain embodiments described below, the network server hard drive **8** stores files, such as a hibernation file **20** comprised of a hibernation image and particular O/S files, a sector sequence list **22**, as well as numerous sets of microinstruction code, such as a MBR **24**, a streaming module **26**, and an O/S MBR **28** including at least a network filter driver **30** and a storage driver **32.**

Optionally, one or more additional servers **34** may be coupled to the network and may communicate with the first server **4** and client PCs **2.** In a multi-server network, a client module **36** (*e.g.,* HPPC) may also reside on the first server **4** and, in response to requests from client devices **2**, specify which additional server **34** contains client addressing information and download information.

The one or more client devices **2** are coupled to the server **4** through a network router or switch **38** in the network. Physical links may assume any of a number of conventional forms, such as cables, switched telephone lines, wireless devices including those operating in radio and infrared spectra, and many others. The client devices and server transfer data to one another using standard network communications protocols. An O/S **40** which supports hibernate functionality, such as Microsoft Windows 2000® and/or Windows XP®, manages the physical facilities of each client device **2** when a sufficient number of O/S modules and O/S drivers are activated. Each client device is similarly equipped with a CPU **42**, such as the x86 family of microprocessors manufactured by Intel Corporation. Each client also includes local memory **44** including ROM **46** storing a BIOS **48**, and RAM **50**, local storage **52**, and a network adapter **54** which are coupled to the CPU by a system bus **56.**

**Figure 1** also illustrates a portion of the client's RAM **50** *after* a sufficient number of sectors have been downloaded and the code they comprise executed. As shown, RAM **50** may contain a downloaded O/S **40**, O/S drivers **76**, O/S loader **78**, network filter driver **30**, storage driver **32**, and O/S network stack **68.** In some embodiments RAM **50** also contains a hibernation file **20** and a copy of a kernel binary providing system utility functions, such as WIN32.SYS **72.**

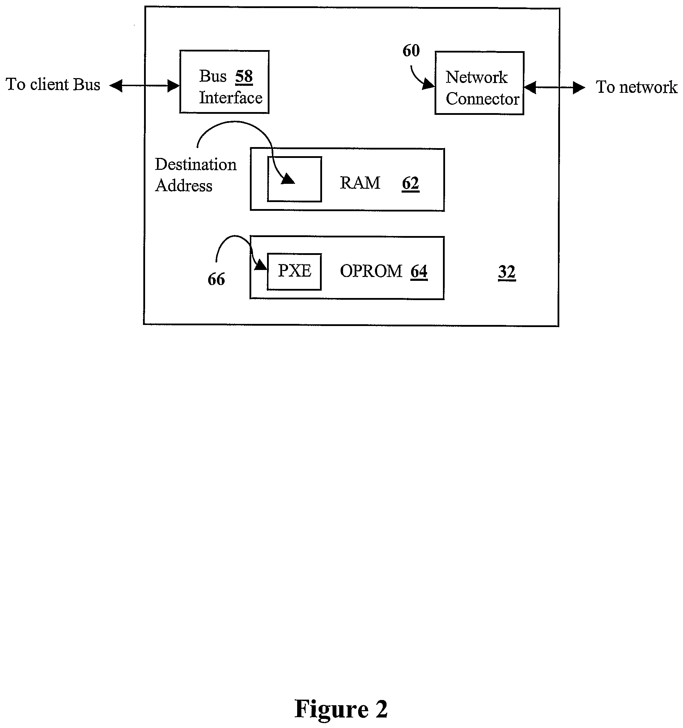

Now referring to **Figure 2**, the network adapter **54** of each client is preferably a network interface card (NIC) that provides a data link between the hardware of the client and the network. Each NIC **54** includes a bus interface **58** for connecting to the client system bus **56**, and one or more network connectors **60** for connecting to the network, which may comprise a LAN or WAN. Also included on the NIC **54** is random access memory (RAM) **62** for storing the unique destination address of the NIC, as well as an Option ROM (OPROM) **64** storing PXE emulation code **66.** The destination address enables each client **2** to be individually addressed by any other computer in the network.

### BootNIC BASIC ARCHITECTURE

The present invention provides a system and method, referred to by the Applicants as BootNIC technology, that in one aspect allows O/S's which support a hibernate function, such as Windows 2000 and Windows XP, to be booted over a network, and in another aspect enables synchronous streaming of data on O/S's which support hibernation *and* those that do not. As each client boots, it will initially communicate with the server **4** using PXE service. PXE code **66** will establish an initial emulated "virtual drive" connection between each client and the server. PXE services allow MBR code **33** to pass read requests to the server, thereby allowing a hibernation file **20** residing on the server to be seen by each client's CPU **42** as a plurality of data sectors which could be stored on a local client hard drive **52.** During the early stages of the bootstrapping, emulation is provided by real mode execution of the MBR code **33**, since the BIOS interrupt handler services operate only in real mode. Later in the process, emulation is provided by the O/S kernel code and the storage driver **32** and network filter driver **30** which execute only in protected mode (no "thunking" occurs.)

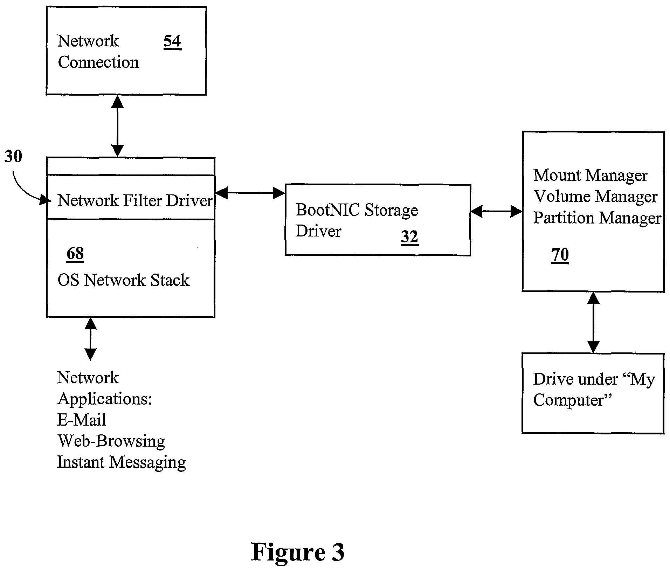

**Figure 3** illustrates in block form a portion of a client's local memory **44** *after* the network filter driver **30** and storage driver **32** have been downloaded from the network server **4** and executed. The sole responsibility of the network filter driver is to monitor all data packets being passed from the network through the client NIC **54** to the O/S network stack **68** for those packets that are BootNIC specific, and intercepts said specific data packets from being passed further down the network stack **68 and** instead passes these packets to the storage driver **32.** The storage driver **32** will in turn communicate with Windows' various Managers **70** responsible for storage such as the Mount Manager, Volume Manager, and Partition Manager. If a network data packet is *not* BootNIC specific, then the data packet is passed down the O/S network stack **68** untouched. Those skilled in the art will appreciate that there are three different types of data packets: (1) broadcast packets, which are packets that are addressed to every computer in the network; (2) multicast packets, which are packets that are addressed to more than one, but not necessarily all, of the computers in the network; and (3) directly addressed packets, which are packets that are addressed to a specific client device only. A system according to the present invention may employ any or all of these data packet delivery approaches.

The present invention takes advantage of the widely adopted specification known as **P**re-Boot E**X**ecution **E**nvironment (PXE), which is a result of an effort to create a predictable, interoperable way for clients to interact with a network in a pre-boot environment (with or without an operating system). The current version of PXE was established as a subset of the Intel®-driven industry initiatives of Wired for Management (WfM). PXE embodies three technologies that establish a common and consistent set of pre-boot services with boot firmware of Intel® Architecture-based systems: (i) a uniform protocol for clients **2** to request the allocation of a network IP address, and subsequently request the downloading of a network bootstrap programs (MBR **24** and O/S MBR **28**) from a network boot server **4**; (ii) a set of APIs available in the pre-boot firmware environment of the client **2** that constitute a consistent set of services that can be employed by the BIOS **48** or bootstrap programs; and a standard method of initiating the pre-boot firmware to execute the PXE protocol on a client PC.

The use of the PXE specification allows, among other things, each client's NIC **54** to serve as a boot device. It also allows the BIOS **48** to make direct use of the NIC code stored on the OPROM **64** before and during the POST process. The present invention, in certain embodiments, optionally takes advantage of the PXE feature of boot server discovery. Using this feature, the booting client **2** can discover an appropriate boot server **4** or **34** from a list of available boot servers provided to the client **2** during the initial phase of the remote boot. Boot server types, or specific hibernate images for download, can be assigned and maintained by an information technology administrator based on the client's system architecture type or even each client's unique ID. PXE uses Dynamic Host Configuration Protocol and Trivial File Transfer Protocol to communicate with the server **4.** When a PXE enabled client boots, it obtains an IP address from a DHCP server **4.** The client **2** may then discover the DHCP server **4**, which provides the client with a list of boot servers. In **Figure 1**, an additional server **34** is shown, which could act in the capacity of a boot server. However, in order to facilitate the explanation of the invention, the processes that result in booting from a hibernation file and broadcasting or multicasting are described in the context of single server **4** network configurations.

### REMOTE BOOTING FROM A HIBERNATION IMAGE

As mentioned previously, the present invention provides a system for and method of booting an O/S to one or more clients **2** from a server **4** storing a hibernation image **20** having O/S files for the client PC's. Each client's CPU **42** executes instructions only from addressable memory such as DRAM or some other type of volatile, electronic memory. In order to initialize this addressable memory, a small amount of PXE code **66** is provided in an OPROM **64** on the NIC **54.** The PXE code **66** allows a request to be issued, to the network server **4** emulating a client local disk, to read the MBR code **24.** The downloaded MBR code **33** enables further disk emulation, and requests an initial portion of the O/S MBR **28**, to be transmitted from the server to the client, where it is loaded into DRAM. The O/S MBR **28** is then responsible for downloading and initializing remaining portions of the O/S, which in turn download the hibernation file **20.** Although the following description involves a single hibernation file **20** which is downloaded to a plurality of clients, one skilled in the art will readily appreciate that numerous hibernation files could potentially be streamed to different sets of clients using the present inventive method. The Applicants have observed that their inventive method reduces by over 50% the time required to boot an O/S **40** over a network, as opposed to a standard O/S local boot.

The hibernation transaction protocol consists of two halves. The first half comprises generating the hibernation image on the boot drive **8** and the second half is the actual resume from the hibernation image.

Prior to starting the inventive boot up process, the hibernation file **20** residing on the server **4** is generated in a straightforward manner. Once a client PC is configured to a desired state, the hibernate function is employed to create a hibernation image in the hibernation file **20.** The hibernation file **20** is then transferred to the server's boot drive **8.** Alternatively, the hibernation process could be executed such that the hibernation file is saved directly to the server boot drive **8.** Although the hibernate function instructs all drivers to power down, the storage driver **32** only does so at the request of the O/S, after caching WIN32.SYS **72** into local memory **50** and writing the memory contents to the file HIBERFIL.SYS (the file O/S loader checks for validity upon resuming). Another step preferably performed prior to initiating the boot process is storing on the boot drive **8** the MBR **24** emulation code.

The architecture of Windows® requires two drivers, the storage driver **32** and network filter driver **30**, in order to communicate with the server rather than only one, because drivers are required to take on a "type" and one driver cannot simultaneously be a storage driver and a network driver. Windows 2000 and XP's implementations of hibernation assume only one O/S driver will be required to communicate with the storage device, and, accordingly, provide no mechanism to allow the hibernation process to support more than one O/S driver. Presently available standard O/S drivers will not work because they have never been written to resume from a file over a network. In the standard resume from a local drive, an O/S storage driver is only required to (and only does) know how to communicate with the local hard drive.

The storage driver **32** "hooks" into the dispatch routines of the NIC driver **74** by replacing the dispatch address for a power handler in the NIC driver **74** with the storage driver's own handler. The storage driver **32** may then call the original NIC driver power handler routine.

The booting process is comprised of many steps, but generally speaking involves one program starting another, each more intelligent than the one before. The major steps of the present inventive method are the BIOS initialization, PXE initialization, the MBR loading and Int 13h redirection, the loading of the hibernate image, and the O/S resume. Note that this solution is specific to Windows 2000; however, the steps listed below encapsulate a generic framework for extending the solution to other operating systems.

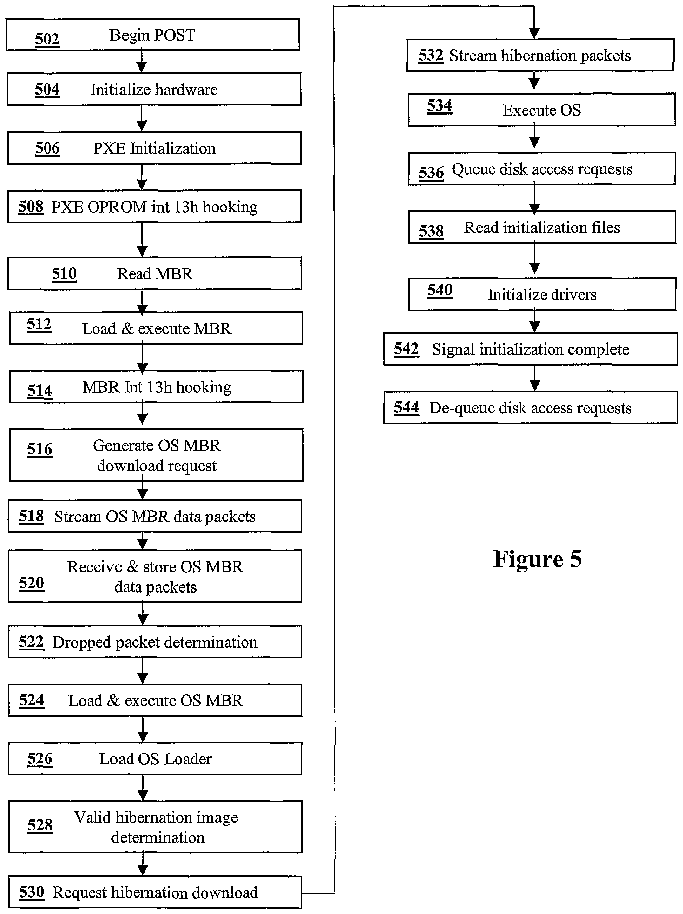

With reference to **Figure 5**, upon powering up, the BIOS **48** initialization of client **2** immediately begins with the execution of a power-on/self-test (POST) sequence (**Step 502**)**.** Each client broadcasts a DHCP discovery request to ascertain its own IP address. The server's O/S, which supports this protocol (and others), returns these parameters as well as the address of a server to boot from, which may or may not be the network server **4.** The virtual boot drive **8** may comprise any nonvolatile storage device associated with the network server **4** (or alternative boot server **34**). Types of drives could include floppy disks, hard disks, magnetic tape, DVD's, CD-ROMs, and flash ROMs. To be a virtual boot drive **8**, a device should hold a copy of a hibernation file containing O/S files, or microinstruction code that is intended to be downloaded.

During the POST, the CPU **42** checks addresses on the bus **56** to determine if an OPROM **64** is present on the client **2.** If it finds an OPROM, the CPU processes any hardware initialization routines located on the OPROM, which initializes the NIC **54** (**Step 504**) to a usable state. The OPROM code then initializes the PXE code 66 (**Step 506**)**.** The OPROM code also "hooks" into the BIOS boot process through the interrupt 13h handler services (**Step 508**) which controls reads and writes to the hard drive **52.** By using the PXE code and assuming control over the NIC **54**, the OPROM **64** code communicates with the server 4 and allows the server's hard drive **8** to transparently emulate a local disk drive **52** of the client **2** through redirection of disk reads and writes to the server.

At the end of the POST sequence, the BIOS **48** will start the booting of the O/S. The BIOS reads the first sector (cylinder 0, head 0, sector 1) of the server's virtual drive **8** (**Step 510**)**.** The first sector stores the MBR **24** (Master Boot Record) that contains additional emulation code to boot the O/S **40.** The MBR **24** code is traditionally provided by the O/S manufacturer, but in order to facilitate the hibernation resume process described below, it was necessary to develop additional emulation code. The MBR code is executed after being loaded into client memory (**Step 512**)**.** The MBR code continues to use PXE **66** to communicate with the network server, and hooks interrupt 13h in order to capture all storage access requests, preventing writes to the server's virtual hard disk **8** (**Step 514**) during the early portion of the boot process.

Read requests may be satisfied by broadcasting the desired data from the virtual drive. However, in certain preferred embodiments, read requests are satisfied using a synchronous streaming method **400** described below. Alternatively, read requests may be processed individually by the network server. Read requests are not passed to the original Int 13h BIOS routine, but instead PXE is used by the MBR to receive data from the network server **4.** Read requests are satisfied by the MBR code, and requests are then returned to the requestor with the data downloaded from the network server **4.** Disk writes are handled differently. The MBR code does not perform writes, but returns a successful write indication to the disk write requestor. Writes are also not passed to the original Int 13h BIOS routine.

The MBR code then proceeds to download an O/S MBR **28** developed by the O/S manufacturer, shown in **Fig 1** as "Windows 2000 MBR". The MBR code **88** at each client **2**, through its hooking of the Int 13h vector, captures all requests for local disk reads before the OPROM **64** has an opportunity to see the requests. The downloaded MBR **88** then forwards, using PXE **66**, the requests to the network server (**step 516**) to download the O/S MBR **28.**

In **step 518**, the network server **4** may either broadcast or synchronously stream data packets that collectively comprise the O/S MBR **28** from the server's virtual drive **8** to each client **2** requesting the O/S MBR download. Synchronization may be accomplished using the synchronized streaming process **400** described below. In these embodiments, streaming module **26** registers for download all clients **2** which make an O/S MBR download request during an invitation period. The invitation period may consist of a predetermined time period that gives all clients an opportunity to register. The streaming module **26** then designates a first client as a Read Requestor. That is, only that client will be allowed to make a read request of the streaming module **26** to multicast to all the registered clients the contents of the next data sector. The streaming module **26** then accesses and multicasts to each of the registered clients **2** the identity of the Read Requestor and the contents of a first sector of a group of sectors on the virtual drive **8** which collectively store the O/S MBR **28.** The streaming module will then determine if all sectors of the O/S MBR group of sectors have been multicast. If more sectors are required to be multicast, the streaming module will designate a new Read Requestor client, provided, of course, that there is more than one registered client. Next, the streaming module accesses the next sector and multicasts its contents with the identity of the new Read Requestor to each of the registered clients. The step of designating a new Read Requestor is preferably performed in a round-robin fashion, whereby one registered client following each sector multicast round will in turn have responsibility for generating a virtual drive read request while the non-designated clients simply wait for multicast data. This streaming process **400** is repeated until the entire O/S MBR **28** has been multicast and subsequently loaded at each client, at which time the downloaded O/S MBR takes control of the network interface **54** and request generation process.

Note that each read request, regardless of which registered client it has come from, will be identical. The read requesting effected by the MBR code may, therefore, proceed in a lock-step fashion. Each read request will be identical because each client will be requesting a read from the same virtual drive and executing the same MBR **28** already downloaded from that virtual drive.

Referring again to **Figure 5**, in **step 520** each registered client has received and stored the broadcast or multicast O/S MBR sectors. The received data sectors are stored in RAM **50**, in a portion of memory reserved in the extended BIOS data area. Each broadcast or multicast sector is sent with a sequential number. Each client may then determine (**step 522**) whether the client successfully received all the sectors that were transmitted. If a client is missing a data packet, the client will then asynchronously request from the network server the missing data sector. This data, though, will only be returned to that individual client and not broadcast or multicast to all the registered clients.

In **step 524**, the O/S MBR **28** (*e*.*g*., Windows 2000 MBR) is loaded into each client's memory **50** and executed. The O/S MBR in turns downloads from the virtual drive an O/S loader **74** (*e.g.,* file NTLDR) (**step 526**) written by the O/S manufacturer. The downloaded O/S loader **78** will check if a valid hibernation image **20** exists on the virtual drive **8** (**step 528**). The virtual drive has previously been set up to contain the valid hibernate image **20.** The O/S loader **78** then begins to load the hibernate image through a series of Int 13h read requests that the MBR **33** will capture and redirect to the network server **4** (**step 530**)**.** The streaming process **400** may again be deployed, on this occasion to access and broadcast or multicast the contents of a plurality of sectors on the virtual drive **8** that collectively store the hibernation file **20** (**step 532**)**.**

Once the hibernate image has been copied to each client's local memory **44**, the O/S loader **78** passes execution to the O/S **40** restored from the hibernation image, *i.e.,* Windows XP or 2000 (**step 534**)**.** Note that, from this point forward, that read requests are not performed in a synchronous manner. Rather, they are transmitted to and answered by the network server on an individual basis.

The O/S **40** now needs to begin waking drivers **76**, such as storage driver **32**, and to perform some initialization to bring the system back to a usable state. In order to configure each client **2** to load the storage and network filter drivers in the proper order, several standard driver registry settings for existing drivers must previously have been modified (*e.g.,* using the *regedit32* registry editor) as described in the table below.

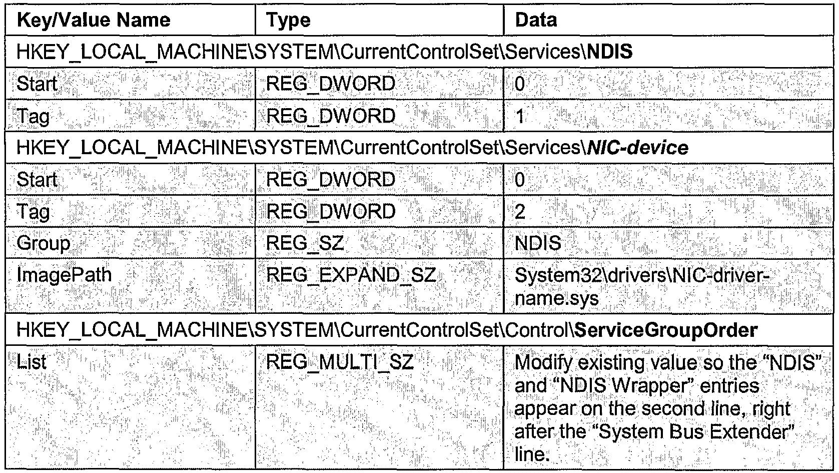

One difficulty encountered here is that the storage driver **32** must prevent any reads or writes until the NIC driver **74** and network filter driver **30** have been initialized. However, the network filter driver will not be initialized until the O/S **40** has read the file WIN32K.SYS **72**, a kernel binary providing system utility functions, such as low-level routines for displaying and printing. This problem has been solved by the early caching of WIN32.SYS into client memory **50** before creating the hibernation image, thereby making the file a part of the hibernation image itself that has now been read into local memory **50.** Thus, the file WIN32K.SYS can be read from local memory without accessing the virtual drive **8.** With one exception, the storage driver **32** queues all O/S disk write and read requests into a cache also previously allocated during the creation of the hibernation image, and now in the client system's memory **50.** The storage driver **32** simply stores the requests until it's safe to allow the requests to be processed, *i.e.,* after the NIC driver **74** and network filter driver **30** have been initialized (**step 536**)**.** The file WIN32K.SYS is read from local client memory and the data is returned back to the O/S (**step 538**)**.**

The O/S **40** then awakens the NIC driver **74** and network filter driver **30** (**step 540**). In **step 542**, the network filter driver **30** informs the storage driver **32** that the NIC **54** has been initialized and that the network filter driver **30** is ready to accept the pending read and write requests. Alternatively, the storage driver **32** may have previously (during the creation of the hibernation image) "hooked" into the NIC driver **74** dispatch function, monitoring its data for "IRP_MJ_POWER". This alerts the storage driver **32** when the network drivers have been awakened. Once the O/S **40** transmits IRP_MJ_POWER to the NIC driver **74**, the request will always be for full power-on (*i.e.,* the NIC is in a completely usable state). The storage driver **32** will wait for the NIC driver to finish processing the IRP_MJ_POWER, which then means the network drivers have been fully awakened.

In **step 544**, the storage driver then de-queues all the cached read and write requests to restore the O/S **40** to a usable state, after which a user may use the client PC in the normal manner. Note that in this embodiment the storage driver handles reads and writes slightly differently. That is, the storage driver caches locally all writes so that the writes are never committed to the virtual driver, in order that different clients do not simultaneously write to the same virtual image and corrupt it. Conversely, reads are actually read from the virtual drive unless a copy of the needed sector has already been cached on the client. In the latter case, the sector is read from the cache in the client's memory and no network transaction takes place.

### SYNCHRONOUS STREAMING OF DESIRED DATA TO A PLURALITY OF CLIENTS

In certain preferred embodiments, data necessary for the boot process to proceed is synchronously streamed, as described in co-pending patent application __________, from the server **4** to the one or more clients **2.** An inventive system in accordance with these embodiments employs transparent local disk emulation and broadcasting or burst mode multicasting of the contents of a set of data sectors residing on the server's "virtual" drive **8** in response to read requests issued by the one or more clients **2.**

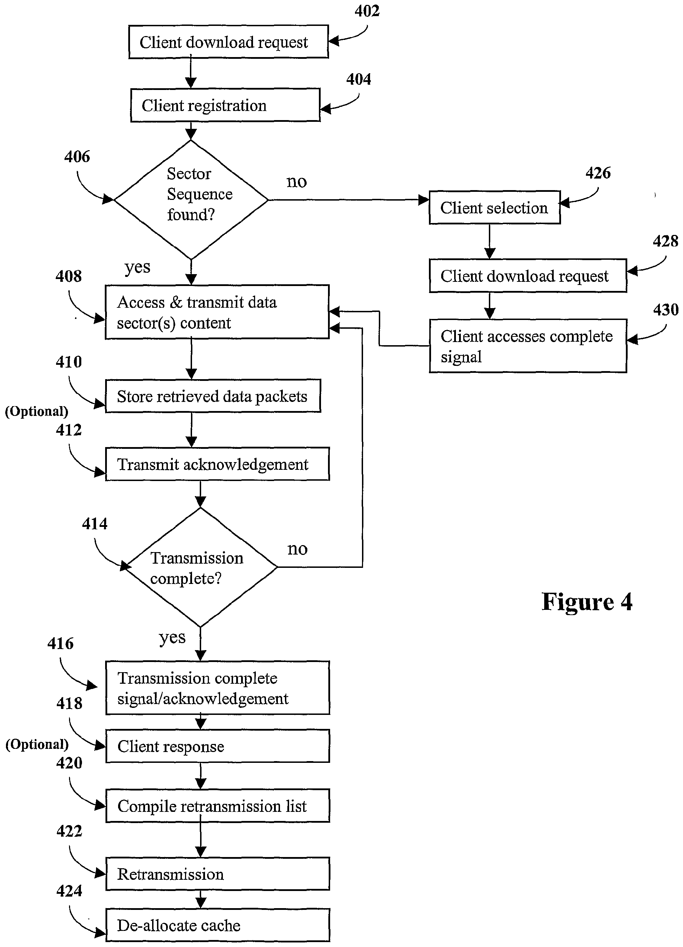

**Figure 4** flowchart illustrates a process **400** for synchronous data streaming. Note that in order to complete a network boot of an O/S on a client using a hibernation file, the synchronous streaming process **400** is basically employed twice (with some significant differences), once before and once after the O/S drivers are initialized. This occurs because the O/S boot process uses interrupt handler processes to download files from the virtual drive **8** during the early portion of the boot process, but later uses the storage driver **32** and network filter driver **30** after they are initialized. This necessitated the need for two solutions to perform essentially similar tasks.

Each client desiring to download particular data issues an initial request. Desired data may comprise boot programs, hibernation files, O/S files, or any application files residing on the server virtual drive **8.** These requests are issued to the server **4**, while the server emulates a client's local disk **52**, at various stages of boot up, either through the execution of the PXE code **66** and downloaded MBR **33** code, or through execution of O/S MBR **28** code in conjunction with the network filter and storage drivers (**step 402**).

In **step 404**, the streaming module **26** of the server registers each client issuing an initial request during a predetermined invitation period. Each registered client now waits and listens for data packets from the streaming module **26.**

In **step 406**, the streaming module looks for a sector sequence file **22** on the server **4.** The sector sequence file **22** determines the order in which the streaming module may access and broadcast or multicast data sectors containing the desired data. If a sector sequence file **22** is not found, program flow passes to a learning process **450** for recording a sector sequence file as described below.

In **step 408**, if a sector sequence file **22** is found, the streaming module **26** will then proceed to broadcast or multicast the desired data to the registered clients. Data packets are preferably broadcast or multicast at a fixed rate.

At each registered client **2**, received data packets are stored into fixed-length queues in order to compensate for differences in the broadcast or multicast rate and client boot process speed (**step 410**). The network and storage drivers handle streaming differently than the early MBR/Int 13h hooking processes. The drivers will load the data into a large, temporary section of memory (a "data cache") that they have pre-allocated on each client. Each registered client keeps track of which data packets it has successfully received. Optionally, each registered client may transmit to the server an acknowledgement that the most recent *N* number of packets have been attempted to be successfully received. (**step 412**) The goal of the client acknowledgments is to ensure that the local client buffers are not overrun.

In **step 414**, the streaming module **26** determines if all the desired data sectors have been accessed and their contents transmitted. If not, then **steps 408** and **410** are repeated until this is accomplished. If all the desired data has been transmitted, the streaming module broadcasts or multicasts a message indicating the transmission is complete (**step 416**). At this point, not every client may have received all the blocks of information successfully. Some might have dropped packets due to various reasons. Some may have missed the beginning of the transmission. In **step 418**, each of the clients **2** will respond to the streaming module **26** with a message indicating success or the need for retransmission of missing packets. The streaming module may then compile and efficiently orders a packet retransmission list (**step 420**). Alternatively, the packet retransmission list may be compiled repeatedly after each fixed number of bytes during data packet transmission (prior to **step 414**.) Retransmission may then occur (**step 422**) on an individual basis between the streaming module and the clients. As most clients will be busy processing their received data packet, network bandwidth will be high; therefore individual retransmissions should have no discernable effect on boot time or network traffic.

In **step 424**, after the downloaded data has been successfully processed, the memory previously reserved for the cache is de-allocated.

As mentioned above, an advantage of the streaming process **400** is that, at each client, while that client's O/S may be occupied with initializing O/S data structures, drivers, or applications, future data needs of the O/S will already have been met by preloading the data packets into memory before the O/S has the need for the data. The streaming module **26** broadcasts and/or multicasts packets to the clients faster than the clients can utilize them, shifting the dependency of boot up time from the data packet transfer time to the client boot process time. In certain embodiments, the streaming module **26** employs the sector sequence file **22** in determining the order of virtual drive sector contents to be transmitted. It is expected that the sector sequence file **22** will have been stored on the server **4** prior to initiating the synchronous streaming process, but if this has not occurred, the sector sequence file **22** may be generated during the learning process **450** described below.

The learning process **450** is executed if the streaming module **26** cannot find the sector sequence file **22.** The sector sequence file is comprised of a list of sectors that the O/S must read in order to complete the boot process. In **step 426**, the streaming module **26** selects one registered client. That client is permitted to boot conventionally, using the inventive MBR **24** and drivers (**30** and **32**), while the streaming module records in a new sector sequence file all sector access requests the selected client makes while booting (**step 428**). In **step 430**, the booting client informs the streaming module that it has completed booting. At this point, the new sector sequence file is stored on the virtual drive **8**, and the streaming process is resumed at **step 408**.

Other embodiments of the invention will be apparent to those skilled in the art from a consideration of the specification or practice of the invention disclosed herein. For example, in some embodiments, the synchronous streaming process **400** may be used only in downloading data requested by the interrupt handler processes, or only in the protected-mode accesses of the server. Or the synchronous streaming process **400** may be employed in preloading applications into the clients. Similarly, in other embodiments, booting from a network copy of a hibernation image without the use of the MBR code to synchronize the request and receipt of data packets is within the scope of this invention. It is, therefore, intended that the specification and examples be considered as exemplary only, with the scope of the invention being as claimed in the following claims.

## Claims

1. A method for booting a client computer (2) to a predetermined state via a network, the method comprising:
issuing, by a client (2) executing emulation code and client disk access interrupt procedures, a request for a first set of sectors of a virtual hard disk (8) associated with a server computing device (4), the first set of sectors comprising a master boot record (24);
receiving, via the network, the master boot record (24) from the server computing device (4);
executing the contents of the master boot record (24), the executing comprising:
installing a second client disk access interrupt handler procedure that intercepts a read request and a write request to a hard disk (52), forwards the read request to the server computing device (4), and caches the write request to prevent the write request from being executed at the virtual hard disk (8) to preserve the state of the virtual hard disk (8); and
issuing a second request for a second set of sectors that comprise an O/S boot file (28);
receiving, from the server computing device (4), the O/S boot file (28);
executing the O/S boot file (28), the executing comprising:
issuing a third request for a third set of sectors comprising a hibernation image (20);
receiving the hibernation image (20), the hibernation image (20) comprising the contents of local memory, memory management information, and other state information needed to restore the client (2) to the pre-determined operating state;
loading the hibernation image (20) into client memory (44);
initializing drivers, data structures and applications associated with the O/S; and
executing, after initializing the drivers, the cached write request to restore the client computer (2) to the predetermined state.

2. The method of claim 1 wherein the second client disk access interrupt handler caches the write requests locally at the client (2).

3. The method of claim 1 wherein the second client disk access interrupt handler caches the write requests at a location on the network.

4. The method of claim 1 wherein the emulation code comprises PXE code resident on the client (2).

5. The method of claim 1 wherein initializing drivers comprises initializing a network filter driver and a storage driver to enable server emulation.

6. The method of claim 1 wherein receiving the hibernation image (20) comprises receiving the hibernation image (20) via the server (4).

7. The method of claim 1 wherein receiving the O/S boot file (28) comprises, receiving the O/S boot file (28) on a sector-by-sector basis.

8. The method of claim 7 further comprising requesting, by the client (2), retransmission of one of the sectors of the O/S boot file (28).

9. The method of claim 1 wherein receiving the hibernation image (20) comprises, receiving the hibernation image (20) on a sector-by-sector basis.

10. The method of claim 9 further comprising requesting, by the client (2), retransmission of one of the sectors of the hibernation image (20).

11. A computer readable medium having instructions thereon that when executed cause a client computer (2) to boot to a predetermined state via a network, the computer readable medium comprising:
instructions to issue, by a client (2) executing emulation code and client disk access interrupt procedures, a request for a first set of sectors of a virtual hard disk (8) associated with a server computing device (4), the first set of sectors comprising a master boot record (24);
instructions to receive, via the network, the master boot record (24) from the server computing device (4);
instructions to execute the contents of the master boot record (24), the instructions to execute comprising:
instructions to install a second client disk access interrupt handler procedure that intercepts a read request and a write request to a hard disk (52), forwards the read request to the server computing device (4), and caches the write request to prevent the write request from being executed at the virtual hard disk (8) to preserve the state of the virtual hard disk (8); and
instructions to issue a second request for a second set of sectors that comprise an O/S boot file (28);
instructions to receive, from the server computing device (4), the O/S boot file (28);
instructions to execute the O/S boot file (28), the instructions to execute comprising:
instructions to issue a third request for a third set of sectors comprising a hibernation image (20);
instructions to receive the hibernation image (20), the hibernation image (20) comprising the contents of local memory, memory management information, and other state information needed to restore the client (2) to the pre-determined operating state;
instructions to load the hibernation image (20) into client memory (44); and
instructions to initialize drivers, data structures and applications associated with the O/S; and
instructions to execute, after the initialization of the drivers, the cached write request to restore the client computer (2) to the predetermined state.

12. The computer readable medium of claim 11 wherein the second client disk access interrupt handler caches the write requests locally at the client (2).

13. The computer readable medium of claim 11 wherein the second client disk access interrupt handler caches the write requests at a location on the network.

14. The computer readable medium of claim 11 wherein the emulation code comprises PXE code resident on the client (2).

15. The computer readable medium of claim 11 wherein the instructions to initialize drivers comprise instructions to initialize a network filter driver and a storage driver to enable server emulation.

16. The computer readable medium of claim 11 wherein the instructions to receive the hibernation image (20) comprise instructions to receive the hibernation image (20) via the server (4).

17. The computer readable medium of claim 11 wherein the instructions to receive the O/S boot file (28) comprise instructions to receive the O/S boot file (28) on a sector-by-sector basis.

18. The computer readable medium of claim 17 further comprising instructions to request, by the client (2), retransmission of one of the sectors of the O/S boot file (28).

19. The computer readable medium of claim 11 wherein the instructions to receive the hibernation image (20) comprise instructions to receive the hibernation image (20) on a sector-by-sector basis.

20. The computer readable medium of claim 19 further comprising instructions to request, by the client (2), retransmission of one of the sectors of the hibernation image (20).

21. A system for booting a client computer (2) to a predetermined state via a network, the system comprising:
means for issuing, by a client (2) executing emulation code and client disk access interrupt procedures, a request for a first set of sectors of a virtual hard disk (8) associated with a server computing device (4), the first set of sectors comprising a master boot record (24);
means for receiving, via the network, the master boot record (24) from the server computing device (4);
means for executing the contents of the master boot record (24), the means for executing comprising:
means for installing a second client disk access interrupt handler procedure that intercepts a read request and a write request to a hard disk(52), forwards the read request to the server computing device (4), and caches the write request to prevent the write request from being executed at the virtual hard disk (8) to preserve the state of the virtual hard disk (8); and
means for issuing a second request for a second set of sectors that comprise an O/S boot file (28);
means for receiving, from the server computing device (4), the O/S boot file (28);
means for executing the second O/S boot file, the means for executing comprising:
means for issuing a third request for a third set of sectors comprising a hibernation image (20);
means for receiving the hibernation image (20), the hibernation image (20) comprising the contents of local memory, memory management information, and other state information needed to restore the client (2) to the pre-determined operating state;
means for loading the hibernation image (20) into client memory (44);
means for initializing drivers, data structures and applications associated with the O/S; and
means for executing, after initializing the drivers, the cached write request to restore the client computer (2) to the predetermined state.

22. The system of claim 21 wherein the second client disk access interrupt handler caches the write requests locally at the client (2).

23. The system of claim 21 wherein the second client disk access interrupt handler caches the write requests at a location on the network.

24. The system of claim 21 wherein the emulation code comprises PXE code resident on the client (2).

25. The system of claim 21 wherein the means for initializing drivers comprises means for initializing a network filter driver and a storage driver to enable server emulation.

26. The system of claim 21 wherein the means for receiving the hibernation image (20) comprises means for receiving the hibernation image (20) via the server (4).

27. The system of claim 21 wherein the means for receiving the O/S boot file (28) comprises the means for receiving the O/S boot file (28) on a sector-by-sector basis.

28. The system of claim 27 further comprising means for requesting, by the client (2), retransmission of one of the sectors of the O/S boot file (28).

29. The system of claim 21 wherein the means for receiving the hibernation image (20) comprises means for receiving the hibernation image (20) on a sector-by-sector basis.

30. The system of claim 29 further comprising means for requesting, by the client (2), retransmission of one of the sectors of the hibernation image (20).

## Patentansprüche

1. Verfahren zum Booten eines Clientcomputers (2) über ein Netzwerk in einen vorgegebenen Zustand, wobei das Verfahren Folgendes umfasst:
Ausgeben, durch einen ausführenden Emulationscode des Clients (2) und Zugriffsunterbrechungsvorgänge des Client-Datenträgers, einer Anforderung für einen ersten Satz von Sektoren einer mit einer Server-Rechenvorrichtung (4) verknüpften virtuellen Festplatte (8), wobei der erste Satz von Sektoren einen Master-Boot-Record (24) umfasst;
Empfangen des Master-Boot-Records (24) über das Netzwerk von der Server-Rechenvorrichtung (4);
Ausführen der Inhalte des Master-Boot-Records (24), wobei das Ausführen Folgendes umfasst:
Installieren eines zweiten Zugriffsunterbrechungsbehandlungsroutinevorgangs für den Client-Datenträger, der eine Leseanforderung und eine Schreibanforderung an eine Festplatte (52) abfängt, die Leseanforderung an die Server-Rechenvorrichtung (4) weiterleitet und die Schreibanforderung zwischenspeichert, um zu verhindern, dass die Schreibanforderung bei der virtuellen Festplatte (8) ausgeführt wird, um den Zustand der virtuellen Festplatte (8) zu erhalten; und
Ausgeben einer zweiten Anforderung für einen zweiten Satz von Sektoren, der eine O/S-Boot-Datei (28) umfasst;
Empfangen der O/S-Boot-Datei (28) von der Server-Rechenvorrichtung (4);
Ausführen der O/S-Boot-Datei (28), wobei das Ausführen Folgendes umfasst:
Ausgeben einer dritten Anforderung für einen dritten Satz von Sektoren, der ein Ruhezustandsbild (20) umfasst;
Empfangen des Ruhezustandsbildes (20), wobei das Ruhezustandsbild (20) die Inhalte des lokalen Speichers, die Speicherverwaltungsinformationen und andere Zustandsinformationen, die zum Wiederherstellen des Clients (2) auf den vorgegebenen Betriebszustand benötigt werden, umfasst;
Laden des Ruhezustandsbildes (20) in den Client-Speicher (44);
Initialisieren von Treibern, Datenstrukturen und Anwendungen, die mit dem O/S verknüpft sind; und
nach dem Initialisieren der Treiber, Ausführen der zwischengespeicherten Schreibanforderung, um den Clientcomputer (2) auf den vorgegebenen Zustand wiederherzustellen.

2. Verfahren nach Anspruch 1, wobei die zweite Zugriffsunterbrechungsbehandlungsroutine für den Client-Datenträger die Schreibanforderung lokal bei dem Client (2) zwischenspeichert.

3. Verfahren nach Anspruch 1, wobei die zweite Zugriffsunterbrechungsbehandlungsroutine für den Client-Datenträger die Schreibanforderung an einer Stelle in dem Netzwerk speichert.

4. Verfahren nach Anspruch 1, wobei der Emulationscode PXE-Code umfasst, der auf dem Client (2) resident ist.

5. Verfahren nach Anspruch 1, wobei das Initialisieren von Treibern das Initialisieren eines Netzwerkfiltertreibers und eines Speichertreibers umfasst, um eine Server-Emulation zu ermöglichen.

6. Verfahren nach Anspruch 1, wobei das Empfangen des Ruhezustandsbildes (20) das Empfangen des Ruhezustandsbildes (20) über den Server (4) umfasst.

7. Verfahren nach Anspruch 1, wobei das Empfangen der O/S-Boot-Datei (28) das Empfangen der O/S-Boot-Datei (28) auf einer Sektor-für-Sektor-Basis umfasst.

8. Verfahren nach Anspruch 7, ferner umfassend das Anfordern, durch den Client (2), der erneuten Übertragung eines der Sektoren der O/S-Boot-Datei (28).

9. Verfahren nach Anspruch 1, wobei das Empfangen des Ruhezustandsbildes (20) das Empfangen des Ruhezustandsbildes (20) auf einer Sektor-für-Sektor-Basis umfasst.

10. Verfahren nach Anspruch 9, ferner umfassend das Anfordern, durch den Client (2), der erneuten Übertragung eines der Sektoren des Ruhezustandsbildes (20).

11. Computerlesbares Medium, mit Anweisungen darauf, die, wenn sie ausgeführt werden, bewirken, dass ein Clientcomputer (2) über ein Netzwerk in einen vorgegebenen Zustand bootet, wobei das computerlesbare Medium Folgendes umfasst:
Anweisungen zum Ausgeben, durch einen einen Emulationscode ausführenden Client (2) und Zugriffsunterbrechungsvorgängen für den Client-Datenträger, einer Anforderung für einen ersten Satz von Sektoren einer mit einer Server-Rechenvorrichtung (4) verknüpften virtuellen Festplatte (8), wobei der erste Satz von Sektoren einen Master-Boot-Record (24) umfasst;
Anweisungen zum Empfangen des Master-Boot-Records (24) über das Netzwerk von der Server-Rechenvorrichtung (4);
Anweisungen zum Ausführen der Inhalte des Master-Boot-Records (24), wobei das Ausführen Folgendes umfasst:
Anweisungen zum Installieren eines zweiten Zugriffsunterbrechungsbehandlungsroutinevorgangs für den Client-Datenträger, der eine Leseanforderung und eine Schreibanforderung an eine Festplatte (52) abfängt, die Leseanforderung an die Server-Rechenvorrichtung (4) weiterleitet und die Schreibanforderung zwischenspeichert, um zu verhindern, dass die Schreibanforderung bei der virtuellen Festplatte (8) ausgeführt wird, um den Zustand der virtuellen Festplatte (8) zu erhalten; und
Anweisungen zum Ausgeben einer zweiten Anforderung für einen zweiten Satz von Sektoren, der eine O/S-Boot-Datei (28) umfasst;
Anweisungen zum Empfangen der O/S-Boot-Datei (28) von der Server-Rechenvorrichtung (4);
Anweisungen zum Ausführen der O/S-Boot-Datei (28), wobei die Anweisungen zum Ausführen Folgendes umfassen:
Anweisungen zum Ausgeben einer dritten Anforderung für einen dritten Satz von Sektoren, der ein Ruhezustandsbild (20) umfasst;
Anweisungen zum Empfangen des Ruhezustandsbildes (20), wobei das Ruhezustandsbild (20) die Inhalte des lokalen Speichers, die Speicherverwaltungsinformationen und andere Zustandsinformationen, die zum Wiederherstellen des Clients (2) auf den vorgegebenen Betriebszustand benötigt werden, umfasst;
Anweisungen zum Laden des Ruhezustandsbildes (20) in den Client-Speicher (44); und
Anweisungen zum Initialisieren von Treibern, Datenstrukturen und Anwendungen, die mit dem O/S verknüpft sind; und
nach dem Initialisieren der Treiber, Anweisungen zum Ausführen der zwischengespeicherten Schreibanforderung, um den Clientcomputer (2) auf den vorgegebenen Zustand wiederherzustellen.

12. Computerlesbares Medium nach Anspruch 11, wobei die zweite Zugriffsunterbrechungsbehandlung für den Client-Datenträger die Schreibanforderungen lokal bei dem Client (2) zwischenspeichert.

13. Computerlesbares Medium nach Anspruch 11, wobei die zweite Zugriffsunterbrechungsbehandlungsroutine für den Client-Datenträger die Schreibanforderungen an einer Stelle in dem Netzwerk zwischenspeichert.

14. Computerlesbares Medium nach Anspruch 11, wobei der Emulationscode PXE-Code umfasst, der auf dem Client (2) resident ist.

15. Computerlesbares Medium nach Anspruch 11, wobei die Anweisungen zum Initialisieren von Treibern Anweisungen zum Initialisieren eines Netzwerkfiltertreibers und eines Speichertreibers umfassen, um eine Server-Emulation zu ermöglichen.

16. Computerlesbares Medium nach Anspruch 11, wobei die Anweisungen zum Empfangen des Ruhezustandsbildes (20) Anweisungen zum Empfangen des Ruhezustandsbildes (20) über den Server (4) umfassen.

17. Computerlesbares Medium nach Anspruch 11, wobei die Anweisungen zum Empfangen der O/S-Boot-Datei (28) Anweisungen zum Empfangen der O/S-Boot-Datei (28) auf einer Sektor-für-Sektor-Basis umfassen.

18. Computerlesbares Medium nach Anspruch 17, ferner umfassend Anweisungen zum Anfordern, durch den Client (2), der erneuten Übertragung eines der Sektoren der O/S-Boot-Datei (28).

19. Computerlesbares Medium nach Anspruch 11, wobei die Anweisungen zum Empfangen des Ruhezustandsbildes (20) Anweisungen zum Empfangen des Ruhezustandsbildes (20) auf einer Sektor-für-Sektor-Basis umfassen.

20. Computerlesbares Medium nach Anspruch 19, ferner umfassend Anweisungen zum Anfordern, durch den Client (2), der erneuten Übertragung eines der Sektoren des Ruhezustandsbildes (20).

21. System zum Booten eines Clientcomputers (2) über ein Netzwerk in einen vorgegebenen Zustand, wobei das System Folgendes umfasst:
ein Mittel zum Ausgeben, durch einen einen Emulationscode ausführenden Client (2) und Zugriffsunterbrechungsvorgänge des Client-Datenträgers, einer Anforderung für einen ersten Satz von Sektoren einer mit einer Server-Rechenvorrichtung (4) verknüpften virtuellen Festplatte (8), wobei der erste Satz von Sektoren einen Master-Boot-Record (24) umfasst;
ein Mittel zum Empfangen des Master-Boot-Records (24) über das Netzwerk von der Server-Rechenvorrichtung (4);
ein Mittel zum Ausführen der Inhalte des Master-Boot-Records (24), wobei das Mittel zum Ausführen Folgendes umfasst:
ein Mittel zum Installieren eines zweiten Zugriffsunterbrechungsbehandlungsroutinevorgangs für den Client-Datenträger, der eine Leseanforderung und eine Schreibanforderung an eine Festplatte (52) abfängt, die Leseanforderung an die Server-Rechenvorrichtung (4) weiterleitet und die Schreibanforderung zwischenspeichert, um zu verhindern, dass die Schreibanforderung bei der virtuellen Festplatte (8) ausgeführt wird, um den Status der virtuellen Festplatte (8) zu erhalten; und
ein Mittel zum Ausgeben einer zweiten Anforderung für einen zweiten Satz von Sektoren, der eine O/S-Boot-Datei (28) umfasst;
Mittel zum Empfangen der O/S-Boot-Datei (28) von der Server-Rechenvorrichtung (4);
Mittel zum Ausführen der zweiten O/S-Boot-Datei (28), wobei die Anweisungen zum
Ausführen Folgendes umfassen:
ein Mittel zum Ausgeben einer dritten Anforderung für einen dritten Satz von Sektoren, der ein Ruhezustandsbild (20) umfasst;
ein Mittel zum Empfangen des Ruhezustandsbildes (20), wobei das Ruhezustandsbild (20) die Inhalte des lokalen Speichers, die Speicherverwaltungsinformationen und andere Zustandsinformationen, die zum Wiederherstellen des Clients (2) auf den vorgegebenen Betriebszustand benötigt werden, umfasst;
ein Mittel zum Laden des Ruhezustandsbildes (20) in den Client-Speicher (44);
ein Mittel zum Initialisieren von Treibern, Datenstrukturen und Anwendungen, die mit dem O/S verknüpft sind; und
nach dem Initialisieren der Treiber, ein Mittel zum Ausführen der zwischengespeicherten Schreibanforderung, um den Clientcomputer (2) auf den vorgegebenen Status wiederherzustellen.

22. System nach Anspruch 21, wobei die zweite Zugriffsunterbrechungsbehandlungsroutine für den Client-Datenträger die Schreibanforderungen lokal bei dem Client (2) zwischenspeichert.

23. System nach Anspruch 21, wobei die zweite Zugriffsunterbrechungsbehandlungsroutine für den Client-Datenträger die Schreibanforderungen an einer Stelle in dem Netzwerk zwischenspeichert.

24. System nach Anspruch 21, wobei der Emulationscode PXE-Code umfasst, der auf dem Client (2) resident ist.

25. System nach Anspruch 21, wobei das Mittel zum Initialisieren von Treibern ein Mittel zum Initialisieren eines Netzwerkfiltertreibers und eines Speichertreibers umfasst, um eine Server-Emulation zu ermöglichen.

26. System nach Anspruch 21, wobei das Mittel zum Empfangen des Ruhezustandsbildes (20) ein Mittel zum Empfangen des Ruhezustandsbildes (20) über den Server (4) umfasst.

27. System nach Anspruch 21, wobei das Mittel zum Empfangen der O/S-Boot-Datei (28) ein Mittel zum Empfangen der O/S-Boot-Datei (28) auf einer Sektor-für-Sektor-Basis umfasst.

28. System nach Anspruch 27, ferner umfassend ein Mittel zum Anfordern, durch den Client (2), der erneuten Übertragung eines der Sektoren der O/S-Boot-Datei (28).

29. System nach Anspruch 21, wobei das Mittel zum Empfangen des Ruhezustandsbildes (20) ein Mittel zum Empfangen des Ruhezustandsbildes (20) auf einer Sektor-für-Sektor-Basis umfasst.

30. System nach Anspruch 29, ferner umfassend ein Mittel zum Anfordern, durch den Client (2), der erneuten Übertragung eines der Sektoren des Ruhezustandsbildes (20).

## Revendications

1. Procédé destiné à amorcer un ordinateur client (2) vers un état prédéterminé via un réseau, le procédé comprenant :
l'émission, par un client (2) exécutant un code d'émulation et des procédures d'interruption d'accès de disque client, d'une requête pour un premier ensemble de secteurs d'un disque dur virtuel (8) associé à un dispositif informatique serveur (4), le premier ensemble de secteurs comprenant un secteur d'amorçage principal (24) ;
la réception, via le réseau, du secteur d'amorçage principal (24) depuis le dispositif informatique serveur (4) ;
l'exécution du contenu du secteur d'amorçage principal (24), l'exécution comprenant de :
installer une seconde procédure de gestionnaire d'interruption d'accès de disque client qui intercepte une requête de lecture et une requête d'écriture sur un disque dur (52), transfère la requête de lecture au dispositif informatique serveur (4) et met en cache la requête d'écriture pour empêcher l'exécution de la requête d'écriture au niveau du disque dur virtuel (8) afin de préserver l'état du disque dur virtuel (8) ; et
émettre une deuxième requête pour un deuxième ensemble de secteurs qui comprennent un fichier d'amorçage O/S (28) ;
la réception, depuis le dispositif informatique serveur (4), du fichier d'amorçage O/S (28) ;
l'exécution du fichier d'amorçage O/S (28), l'exécution comprenant de :
émettre une troisième requête pour un troisième ensemble de secteurs comprenant une image d'hibernation (20) ;
la réception de l'image d'hibernation (20), l'image d'hibernation (20) comprenant le contenu de mémoire locale, des informations de gestion de mémoire et d'autres informations d'état nécessaires pour restaurer l'état de fonctionnement prédéterminé du client (2) ;
le chargement de l'image d'hibernation (20) dans la mémoire cliente (44) ;
l'initialisation des pilotes, structures de données et applications associées à l'O/S ; et
l'exécution, après initialisation des pilotes, de la requête d'écriture en cache pour restaurer l'ordinateur client (2) à l'état prédéterminé.

2. Procédé selon la revendication 1, dans lequel le second gestionnaire d'interruption d'accès de disque client met en cache les requêtes d'écriture localement au niveau du client (2).

3. Procédé selon la revendication 1, dans lequel le second gestionnaire d'interruption d'accès de disque client met en cache les requêtes d'écriture à un certain emplacement sur le réseau.

4. Procédé selon la revendication 1, dans lequel le code d'émulation comprend du code PXE résident sur le client (2).

5. Procédé selon la revendication 1, dans lequel initialiser les pilotes comprend d'initialiser un pilote de filtre réseau et un pilote de stockage pour permettre l'émulation du serveur.

6. Procédé selon la revendication 1, dans lequel recevoir l'image d'hibernation (20) comprend de recevoir l'image d'hibernation (20) via le serveur (4).

7. Procédé selon la revendication 1, dans lequel recevoir le fichier d'amorçage O/S (28) comprend de recevoir le fichier d'amorçage O/S (28) sur une base de secteur par secteur.

8. Procédé selon la revendication 7, comprenant en outre la requête, par le client (2), de la retransmission d'un des secteurs du fichier d'amorçage O/S (28).

9. Procédé selon la revendication 1, dans lequel recevoir l'image d'hibernation (20) comprend de recevoir l'image d'hibernation (20) sur une base de secteur par secteur.

10. Procédé selon la revendication 9, comprenant en outre la requête, par le client (2), de la retransmission d'un des secteurs de l'image d'hibernation (20).

11. Support lisible par ordinateur contenant des instructions qui, quand elles sont exécutées, amènent un ordinateur client (2) à s'amorcer à un état prédéterminé via un réseau, le support lisible par ordinateur comprenant :
des instructions pour qu'un client (2) émette un code d'émulation et des procédures d'interruption d'accès de disque client, une requête pour un premier ensemble de secteurs d'un disque dur virtuel (8) associé à un dispositif informatique serveur (4), le premier ensemble de secteurs comprenant un secteur d'amorçage principal (24) ;
des instructions pour recevoir, via le réseau, le secteur d'amorçage principal (24) du dispositif informatique serveur (4) ;
des instructions pour exécuter le contenu du secteur d'amorçage principal (24), les instructions pour exécuter comprenant :
des instructions pour installer une seconde procédure de gestionnaire d'interruption d'accès de disque client qui intercepte une requête de lecture et une requête d'écriture sur un disque dur (52), transfère la requête de lecture au dispositif informatique serveur (4) et met en cache la requête d'écriture pour empêcher l'exécution de la requête d'écriture au niveau du disque dur virtuel (8) afin de préserver l'état du disque dur virtuel (8) ; et
des instruction pour émettre une deuxième requête pour un deuxième ensemble de secteurs qui comprennent un fichier d'amorçage O/S (28) ;
des instructions pour recevoir, du dispositif informatique serveur (4), le fichier d'amorçage O/S (28) ;
des instructions pour exécuter le fichier d'amorçage O/S (28), les instructions pour exécuter comprenant :
des instructions pour émettre une troisième requête pour un troisième ensemble de secteurs comprenant une image d'hibernation (20) ;
des instructions pour recevoir l'image d'hibernation (20), l'image d'hibernation (20) comprenant le contenu de mémoire locale, des informations de gestion de mémoire et d'autres informations d'état nécessaires pour restaurer l'état de fonctionnement prédéterminé du client (2) ;
des instructions pour charger l'image d'hibernation (20) dans la mémoire cliente (44) ; et
des instructions pour initialiser des pilotes, des structures de données et des applications associées à l'O/S ; et
des instructions pour exécuter, après l'initialisation des pilotes, la requête d'écriture en cache pour restaurer l'ordinateur client (2) à l'état prédéterminé.

12. Support lisible par ordinateur selon la revendication 11, dans lequel le second gestionnaire d'interruption d'accès de disque client met en cache les requêtes d'écriture localement au niveau du client (2).

13. Support lisible par ordinateur selon la revendication 11, dans lequel le second gestionnaire d'interruption d'accès de disque client met en cache les requêtes d'écriture à un certain emplacement sur le réseau.

14. Support lisible par ordinateur selon la revendication 11, dans lequel le code d'émulation comprend du code PXE résident sur le client (2).

15. Support lisible par ordinateur selon la revendication 11, dans lequel initialiser les pilotes comprend d'initialiser un pilote de filtre réseau et un pilote de stockage pour permettre l'émulation du serveur.

16. Support lisible par ordinateur selon la revendication 11, dans lequel recevoir l'image d'hibernation (20) comprend de recevoir l'image d'hibernation (20) via le serveur (4).

17. Support lisible par ordinateur selon la revendication 11, dans lequel recevoir le fichier d'amorçage O/S (28) comprend de recevoir le fichier d'amorçage O/S (28) sur une base de secteur par secteur.

18. Support lisible par ordinateur selon la revendication 17, comprenant en outre la requête, par le client (2), de la retransmission d'un des secteurs du fichier d'amorçage O/S (28).

19. Support lisible par ordinateur selon la revendication 11, dans lequel recevoir l'image d'hibernation (20) comprend des instructions permettant de recevoir de recevoir l'image d'hibernation (20) sur une base secteur par secteur.

20. Support lisible par ordinateur selon la revendication 19, comprenant en outre des instructions pour la requête, par le client (2), de la retransmission d'un des secteurs de l'image d'hibernation (20).

21. Système pour amorcer un ordinateur client (2) à un état prédéterminé via un réseau, le système comprenant :
un moyen pour l'émission, par un client (2) exécutant un code d'émulation et des procédures d'interruption d'accès de disque client, d'une requête pour un premier ensemble de secteurs d'un disque dur virtuel (8) associé à un dispositif informatique serveur (4), le premier ensemble de secteurs comprenant un secteur d'amorçage principal (24) ;
un moyen destiné à la réception, via le réseau, du secteur d'amorçage principal (24) depuis le dispositif informatique serveur (4) ;
un moyen destiné à l'exécution du contenu du secteur d'amorçage principal (24), le moyen d'exécution comprenant :
un moyen destiné à l'installation d'une seconde procédure de gestionnaire d'interruption d'accès de disque client qui intercepte une requête de lecture et une requête d'écriture sur un disque dur (52), transfère la requête de lecture au dispositif informatique serveur (4) et met en cache la requête d'écriture pour empêcher l'exécution de la requête d'écriture au niveau du disque dur virtuel (8) afin de préserver l'état du disque dur virtuel (8) ; et
un moyen pour émettre une deuxième requête pour un deuxième ensemble de secteurs qui comprennent un fichier d'amorçage O/S (28) ;
un moyen pour la réception, depuis le dispositif informatique serveur (4), du fichier d'amorçage O/S (28) ;
un moyen pour l'exécution du fichier d'amorçage O/S (28), le moyen d'exécution comprenant :
un moyen pour émettre une troisième requête pour un troisième ensemble de secteurs comprenant une image d'hibernation (20) ;
un moyen pour la réception de l'image d'hibernation (20), l'image d'hibernation (20) comprenant le contenu de mémoire locale, des informations de gestion de mémoire et d'autres informations d'état nécessaires pour restaurer l'état de fonctionnement prédéterminé du client (2) ;
un moyen pour le chargement de l'image d'hibernation (20) dans la mémoire cliente (44) ;
un moyen pour l'initialisation des pilotes, structures de données et applications associées à l'O/S ; et
un moyen pour l'exécution, après initialisation des pilotes, de la requête d'écriture en cache pour restaurer l'ordinateur client (2) à l'état prédéterminé.

22. Système selon la revendication 21, dans lequel dans lequel le second gestionnaire d'interruption d'accès de disque client met en cache les requêtes d'écriture localement au niveau du client (2).

23. Système selon la revendication 21, dans lequel le second gestionnaire d'interruption d'accès de disque client met en cache les requêtes d'écriture à un certain un emplacement sur le réseau.

24. Système selon la revendication 21, dans lequel le code d'émulation comprend du code PXE résident sur le client (2).

25. Système selon la revendication 21, dans lequel initialiser les pilotes comprend d'initialiser un pilote de filtre réseau et un pilote de stockage pour permettre l'émulation du serveur.

26. Système selon la revendication 21, dans lequel recevoir l'image d'hibernation (20) comprend de recevoir l'image d'hibernation (20) via le serveur (4).

27. Système selon la revendication 21, dans lequel recevoir le fichier d'amorçage O/S (28) comprend de recevoir le fichier d'amorçage O/S (28) sur une base de secteur par secteur.

28. Système selon la revendication 27, comprenant en outre la requête, par le client (2), de la retransmission d'un des secteurs du fichier d'amorçage O/S (28).

29. Système selon la revendication 21, dans lequel recevoir l'image d'hibernation (20) comprend de recevoir l'image d'hibernation (20) sur une base de secteur par secteur.

30. Système selon la revendication 29, comprenant en outre la requête, par le client (2), de la retransmission d'un des secteurs de l'image d'hibernation (20).
